# EUROPÄISCHE PATENTSCHRIFT

(11) **EP 1 103 347 B1**
(45) Veröffentlichungstag und Bekanntmachung des Hinweises auf die Patenterteilung: **26.04.2006**
(21) Anmeldenummer: 00122648.9
(22) Anmeldetag: 18.10.2000
(51) Int. Cl.: B24D 5/12, B28D 1/12, B23D 61/02, B24D 5/10

(54) **Werkzeugeinsatz zum Trennen, Schlitzen oder Scheifen von Werkstücken**
Tool for cutting, grooving or grinding workpieces
Outil pour tronçonner, rainurer ou meuler des pièces

(30) Priorität: 29.10.1999 DE 29919103 U
(43) Veröffentlichungstag der Anmeldung: 30.05.2001
(73) Patentinhaber: Reca Norm GmbH & Co. KG, 74635 Kupferzell (DE)
(72) Erfinder: Kull, Roland, 74676 Niedernhall (DE)
(74) Vertreter: Patentanwälte Ruff, Wilhelm, Beier, Dauster & Partner

(56) Entgegenhaltungen:
- EP-A- 0 836 903
- US-A- 5 758 561

## Beschreibung

### Anwendungsgebiet und Stand der Technik

Die Erfindung bezieht sich auf einen Werkzeugeinsatz zum Trennen, Schlitzen oder Schleifen von Werkstücken, mit einem Schneidrand bzw. einer Schleiffläche und mindestens einer Aufnahmeöffnung zur Festlegung des Werkzeugeinsatzes an einer Trenn- oder Schleifmaschine.

Werkzeugeinsätze dieser Art werden in den verschiedensten Bereichen eingesetzt. In der Bauindustrie hat nahezu jedes Gewerk, beispielsweise Maurer, Dachdecker, Fliesenleger oder Elektriker Verwendung für Schleif- oder Trennscheiben. Es können damit Arbeiten wie Durchtrennen von Beton, Gußrohren, usw. durchgeführt werden. Trenn- oder Schleifscheiben können in beweglichen, von Hand geführten Arbeitsmaschinen, wie beispielsweise Winkelschleifern oder in stationären Bearbeitungsmaschinen, wie beispielsweise Tischsägen, eingesetzt werden.

Aus der EP 0836903 A1 ist eine Trennscheibe, insbesondere für Granit, Marmor, Stahlbeton und Gestein bekannt. Die dort beschriebene Trennscheibe verfügt über Durchgangslöcher, welche dem Zweck dienen, eine Verformung der Trennscheibe aufgrund der entstehenden Wäre zu verhindern, die Geräuschentwicklung zu vermindern und das Gewicht der Trennscheibe zu reduzieren. Die dort angeführten Ausführungsbeispielen unterscheiden sich bezüglich der Gestalt, der Verteilung und der Zahl dieser Durchgangslöcher.

### Aufgabe und Lösung

Aufgabe der Erfindung ist es, ein Werkzeugeinsatz der eingangs genannten Art zur Verfügung zu stellen, dessen Arbeitsdrehrichtungrichtung beidseitig deutlich erkennbar ist, so dass ein verkehrtes Einspannen des Werkzeugeinsatzes verhindert wird.

Diese Aufgabe wird erfindungsgemäß durch die Merkmale des Anspruchs 1 gelöst. Der Werkzeugeinsatz weist demnach einen Schneidrand bzw. eine Schleiffläche, mindestens eine Aufnahmeöffnung zur Festlegung des Werkzeugeinsatzes an einer Trenn- oder Schleifmaschine und mindestens zwei auf einer Kreisbahn um den Mittelpunkt des Werkzeugeinsatzes rotationssymmetrisch angeordnete Durchbrechungen zwischen Aufnahmeöffnung und Schneidrand auf. Die Durchbrechungen sind als in eine Arbeitsdrehrichtung des Werkzeugeinsatzes weisende Richtungsanzeigen ausgebildet und auf beiden Seiten des Werkzeugeinsatzes sichtbar.

Die Richtungsanzeigen sind also unverlierbar und durch Reibung zwischen der Trenn- oder Schleifscheibe und dem Werkstück nicht abtragfähig, wie beispielsweise eingestanzte oder aufgeklebte Richtungsanzeigen. Dies verhindert ein falsches Einlegen des Werkzeugeinsatzes in die Trenn- oder Schleifmaschine. Mit Vorteil sind die Richtungsanzeigen auch auf beiden Seiten des Werkzeugeinsatzes fühlbar ausgebildet. So kann also auch bei schlechtem Licht oder Dunkelheit der Werkzeugeinsatz richtig herum eingelegt werden.

Der erfindungsgemäße Werkzeugeinsatz weist mindestens zwei Durchbrechungen auf. Bevorzugt liegt die Zahl der Durchbrechungen im Bereich von 2 bis 30, insbesondere im Bereich von 6 bis 20. Bevorzugt sind Werkzeugeinsätze mit 8 als Richtungsanzeigen ausgebildeten Durchbrechungen. Mit Vorteil liegen die Durchbrechungen auf einer einzigen Kreisbahn um den Mittelpunkt. Die Durchbrechungen können paarweise diametral gegenüberliegend angeordnet sein. Der Abstand der Richtungsanzeigen untereinander auf der gemeinsamen Kreisbahn ist mit Vorteil regelmäßig.

Besonders bevorzugt sind die als Richtungsanzeigen ausgebildeten Durchbrechungen pfeilförmig ausgebildet. Vorzugsweise weisen sie die Form einer Pfeilspitze auf, können aber auch die Form eines Pfeiles oder ähnlichen richtungsanzeigenden Geometrien haben. Der Pfeilspitzenwinkel liegt im Bereich von ca. 60° bis 90°, vorzugsweise 70° bis 80°. Die Länge der Pfeilspitzen liegt vorzugsweise im Bereich von 4 bis 10 mm, insbesondere von 5 bis 8 mm. Die lichte Breite der Pfeilspitzenschenkel beträgt vorzugsweise 1 bis 4 mm, insbesondere 2 bis 3 mm. Mit Vorteil haben die pfeilförmig ausgebildeten Richtungsanzeigen abgerundete Kanten. Dadurch ist es möglich, trotz Luftverwirbelungen an den Durchbrechungen eine hohe Laufruhe des Werkzeugeinsatzes sicherzustellen, also ein Heulen oder Pfeifen zu verhindern.

Mit Vorteil sind die Durchbrechungen an ihrem Umfang geschlossen. Die Durchbrechungen sind nicht im Bereich des Schneidrandes angeordnet. Der Werkzeugeinsatz kann einen offenen oder geschlossenen Schneidrand aufweisen.

Besonders bevorzugt weist der Schneidrand des Werkzeugeinsatzes Schneidmittel auf. Die Schneidmittel können Schneidsegmente, Schneidzähne oder ähnliches sein. Die Schneidmittel können beispielsweise entgegen der durch die Richtungsanzeigen angezeigten Arbeitsdrehrichtung geneigt sein. Der Schneidrand hat eine radiale Ausdehnung von 5 bis 20 mm, insbesondere von 10 bis 15 mm. Der Schneidrand kann mit dem Kern des Werkzeugeinsatzes verschweißt, beispielsweise durch Laserverschweißung verbunden sein. Er kann auch aufgesintert sein. Mit Vorteil ist der Werkzeugeinsatz als mit Diamanten besetzte Trennscheibe ausgebildet. Es werden vorzugsweise synthetische Diamanten eingesetzt. Der Werkzeugeinsatz, also die Trenn- oder Schleifscheibe, kann aus Stahl, Schnellarbeitsstahl, Hartmetall oder ähnlichem bestehen. Mit Vorteil wird die Trenn- oder Schleifscheibe aus einem mehrschichtigem Metallblatt hergestellt. Dabei werden in Sandwichbauweise mehrere, bespielsweise drei, Stahlscheiben aufeinander gedampft. Dies führt zu einer laufruhigen Scheibe mit einer hohen Schnittgüte. Der erfindungsgemäße Werkzeugeinsatz kann in den verschiedensten Trenn- oder Schleifmaschinen, wie beispielsweise Winkelschleifer, Mauernutfräsen, Fugenschneider, Tischsägen, stationäre Schleifautomaten usw. eingesetzt werden. Der Gesamtdurchmesser des Werkzeugeinsatzes beträgt ca. 100 - 1000 mm. Für Winkelschleifer werden üblicherweise Trenn- oder Schleifscheiben mit einem Durchmesser von ca. 100 - 300 mm, für Fugenschneider solche mit einem Durchmesser von ca. 300 - 600 mm und für Tischsägen solche mit einem Durchmesser von ca. 200 - 1000 mm, verwendet. Es können damit verschiedenste Materialien, wie Stahl, Guß, Glas, Fliesen, Waschbeton, armierter Beton, Keramik, Ziegelsteine, Asphalt usw. bearbeitet werden.

### Figurenbeschreibung

Ein Ausführungsbeispiel der Erfindung ist schematisch in der Zeichnung dargestellt und wird im folgenden näher erläutert. Die einzigste Zeichnungen zeigt:

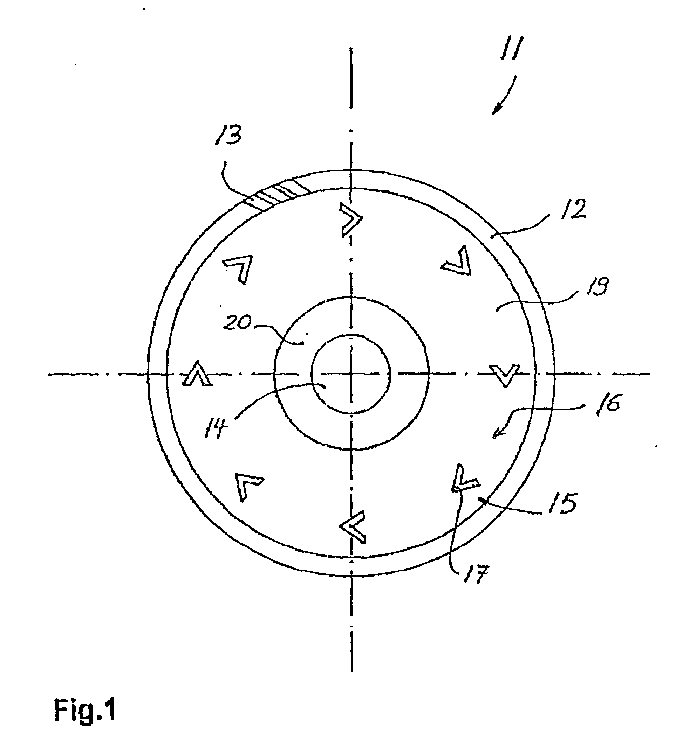

- Fig. 1: eine schematisch dargestellte Draufsicht auf den Werkzeugeinsatz.

Die in der Fig. 1 dargestellte Trennscheibe 11 ist zum Einsatz in einen Winkelschleifer oder eine Mauernutfräse geeignet. Die Trennscheibe 11 ist aus Metall. Die Dicke der Trennscheibe 11 beträgt ca. 4 mm. Sie besitzt eine Aufnahmeöffnung 14, einen Beschriftungsbereich 20, einen Mittelteil 19 mit als Richtungsanzeigen 15 ausgebildeten Durchbrechungen 17 und einen Schneidrand 12.

Die Aufnahmeöffnung 14 ist ein Mittelloch der Scheibe 11. Sie hat einen Durchmesser von ca. 22 mm und ist auf eine Arbeitsspindel einer Mauernutfräse oder eines Winkelschleifers aufsteckbar.

Konzentrisch zur Aufnahmeöffnung 14 erstreckt sich der Beschriftungsbereich 20 der Scheibe 11. Im Beschriftungsbereich 20 sind Informationen über den Einsatzbereich, den Hersteller der Trennscheibe 11, Sicherheitsvorschriften usw. vermerkt. Die Informationen können sowohl in die Scheibe 11 eingestanzt sein oder auch in Form eines Etiketts aufgeklebt sein. Im Beschriftungsbereich 20 kann ein zusätzlicher Richtungspfeil (nicht dargestellt), der die Arbeitsdrehrichtung 16 der Trennscheibe 11 anzeigt, angebracht werden.

Konzentrisch zum Beschriftungsbereich 20 liegt der Mittelteil 19 der Trennscheibe 11. Der Mittelteil 19 besitzt acht als Richtungsanzeigen 15 ausgebildete Durchbrechungen 17 in Form von schlitzförmig ausgebildeten Pfeilspitzen. Die acht Pfeilspitzen sind in regelmäßigen Abständen auf einer Kreisbahn um den Mittelpunkt der Trennscheibe 11 angeordnet. Sie sind am äußeren Bereich des Mittelteils 19 angeordnet, also näher am Schneidrand 12 als an der Aufnahmeöffnung 14. Der Pfeilspitzenwinkel beträgt 76°. Die äußere Schenkellänge der Pfeilspitze beträgt 7,4 mm. Die Breite der schlitzförmigen Pfeilspitze beträgt 2,5 mm. Die Kanten der Pfeilspitzen, also der Übergang der Scheibenoberfläche zur Durchbrechung 17, sind abgerundet ausgebildet.

Der Schneidrand 12 ist konzentrisch zum Mittelteil 19 am äußeren Rand der Trennscheibe 11 angeordnet. Der Schneidrand 12 ist geschlossen. Er weist ca. 80 bis 100 sägezahnartig ausgebildete Schneidsegmente auf. Der Schneidrand 12 hat eine radiale Ausdehnung von ca. 10 mm und ist auf das Mittelteil 19 aufgesintert. Die Schneidsegmente sind entgegen der Arbeitsdrehrichtung 16 der Trennscheibe 11 geneigt. Die einzelnen Schneidsegmente sind vom Innenrand des Schneidrandes 12, der an den Mittelteil 19 der Trennscheibe 11 angrenzt, bis zum Außenrand hin trapezförmig ausgebildet, wobei die längere Grundseite am Außenrand der Trennscheibe 11 angeordnet ist. An der kürzeren Grundseite sind die Schneidsegmente durch Verstärkungsrippen miteinander verbunden. Die Schneidsegmente sind mit einer Körnung synthetischer Diamanten besetzt. Die Diamanten haben eine MOHS-Härte von 10, und der Korndurchmesser beträgt ca. 0,1 mm.

## Patentansprüche

1. Werkzeugeinsatz in Form einer Trennscheibe aus Metall, mit einem Schneidrand (12) bzw. einer Schleiffläche, mindestens einer Aufnahmeöffnung (14) zur Festlegung des Werkzeugeinsatzes (11) an einer Trenn- oder Schleifmaschine und mindestens zwei auf einer Kreisbahn um den Mittelpunkt des Werkzeugeinsatzes (11) rotationssymmetrisch angeordnete Durchbrechungen (17) zwischen Aufnahmeöffnung (14) und Schneidrand (12),
**dadurch gekennzeichnet, dass**
die Durchbrechungen (17) als in eine Arbeitsdrehrichtung (16) des Werkzeugeinsatzes (11) weisende Richtungsanzeigen (15) ausgebildet und auf beiden Seiten des Werkzeugeinsatzes (11) sichtbar sind.

2. Werkzeugeinsatz nach Anspruch 1, **dadurch gekennzeichnet, dass** die Durchbrechungen (17) an ihren Umfang geschlossen sind.

3. Werkzeugeinsatz nach einem der vorgenannten Ansprüche, **dadurch gekennzeichnet, dass** die Durchbrechungen (17), insbesondere die Richtungsanzeigen (15), auf beiden Seiten des Werkzeugeinsatzes (11) fühlbar ausgebildet sind.

4. Werkzeugeinsatz nach einem der vorgenannten Ansprüche, **dadurch gekennzeichnet, dass** der Werkzeugeinsatz (11) 2 bis 30, vorzugsweise 6 bis 20 Durchbrechungen (17) aufweist, die vorzugsweise auf einer einzigen Kreisbahn angeordnet sind.

5. Werkzeugeinsatz nach einem der vorgenannten Ansprüche, **dadurch gekennzeichnet, dass** die als Richtungsanzeigen (15) ausgebildeten Durchbrechungen (17) pfeilförmig ausgebildet sind, insbesondere die Form einer Pfeilspitze aufweisen.

6. Werkzeugeinsatz nach einem der vorgenannten Ansprüche, **dadurch gekennzeichnet, dass** der Werkzeugeinsatz (11) als mit Diamanten besetzte Trennscheibe ausgebildet ist.

## Claims

1. Detachable tool in form of a metallic cutting disc, with a cutting edge (12) or a grinding surface, at least one receptacle (14) for fixing the detachable tool (11) on a cutting-disc or grinding machine and at least two rotation-symmetrical arranged perforations (17) between receptacle (14) and cutting edge (12) on a circular path around the middle point of the detachable tool (11),
**characterized in that**
the perforations (17) are formed as direction indicators (15) pointing towards the working direction of rotation (16) of the detachable tool (11) and visible on both sides of the detachable tool (11).

2. Detachable tool according to Claim 1, **characterized in that** the perforations (17) are closed on their circumference.

3. Detachable tool according to one of the preceding claims, **characterized in that** the perforations (17), especially the direction indicators (15), are designed tangible on both sides of detachable tool (11).

4. Detachable tool according to one of the preceding claims, **characterized in that** the detachable tool (11) exhibits 2 to 30, preferably 6 to 20 perforations (17), which are preferably located on a single circular path.

5. Detachable tool according to one of the preceding claims, **characterized in that** the perforations (17) formed as direction indicators (15) are arrow shaped, and especially exhibit the shape of an arrowhead.

6. Detachable tool according to one of the preceding claims, **characterized in that** the detachable tool (11) is formed as a cutting disc fitted with diamonds.

## Revendications

1. Pièce rapportée pour outil, sous forme d'une meule à tronçonner en métal, comprenant un bord de coupe (12) ou une surface de ponçage, au moins un orifice de logement (14) pour fixer la pièce rapportée pour outil (11) sur une machine à tronçonner ou une ponceuse et au moins deux perforations (17), disposées en symétrie de rotation sur une orbite autour du point central de la pièce rapportée pour outil (11), entre l'orifice de logement (14) et le bord de coupe (12),
**caractérisée en ce que**
les perforations (17) sont constituées en indications de direction (15) tournées dans un sens de rotation de travail (16) de la pièce rapportée pour outil (11) et qu'elles sont visibles des deux côtés de la pièce rapportée pour outil (11).

2. Pièce rapportée pour outil selon la revendication 1, **caractérisée en ce que** les perforations (17) sont fermées sur leur pourtour.

3. Pièce rapportée pour outil selon l'une quelconque des revendications précédentes, **caractérisée en ce que** les perforations (17), notamment les indications de direction (15), sont formées de manière tactile sur les deux côtés de la pièce rapportée pour outil (11).

4. Pièce rapportée pour outil selon l'une quelconque des revendications précédentes, **caractérisée en ce que** la pièce rapportée pour outil (11) présente 2 à 30 perforations (17), de préférence 6 à 20 perforations, qui sont disposées de préférence sur une seule orbite.

5. Pièce rapportée pour outil selon l'une quelconque des revendications précédentes, **caractérisée en ce que** les perforations (17) constituées en indications de direction (15) sont réalisées en forme de flèche, en particulier présentent la forme d'une pointe de flèche.

6. Pièce rapportée pour outil selon l'une quelconque des revendications précédentes, **caractérisée en ce que** la pièce rapportée pour outil (11) est réalisée comme une meule à tronçonner diamantée.
